Europäisches Patentamt

European Patent Office

Office européen des brevets

(19)

(11) Numéro de publication: **0 189 341**
A1

# (12) DEMANDE DE BREVET EUROPEEN

(21) Numéro de dépôt: 86400056.7

(22) Date de dépôt: 10.01.86

(51) Int. Cl.⁴: **G 11 B 7/00**, G 11 B 7/013, G 11 B 7/16, G 11 B 7/20, G 11 B 7/09

(30) Priorité: 15.01.85 FR 8500527

(43) Date de publication de la demande: 30.07.86 **Bulletin 86/31**

(84) Etats contractants désignés: **CH DE GB LI**

(71) Demandeur: **THOMSON-CSF, 173, Boulevard Haussmann, F-75379 Paris Cedex 08 (FR)**

(72) Inventeur: **Arnaud, Georges, THOMSON-CSF SCPI 19, av. de Messine, F-75008 Paris (FR)**
Inventeur: **Girault, Jean, THOMSON-CSF SCPI 19, av. de Messine, F-75008 Paris (FR)**
Inventeur: **Reymond, Jean-Claude, THOMSON-CSF SCPI 19, av. de Messine, F-75008 Paris (FR)**

(74) Mandataire: **Trocellier, Roger et al, THOMSON-CSF SCPI 19, avenue de Messine, F-75008 Paris (FR)**

(54) Mémoire numérique à film photographique couleur, et dispositif de lecture optique correspondant.

(57) L'invention permet de réaliser une mémoire de données numériques stockées sur un film (1), de lire ces données au moyen d'un lecteur vidéo (10), à spot mobile (3) asservi en position sur le film.

Les données sont enregistrées sur une ou plusieurs pistes superposées, chacune étant de composante chromatique différente. La densité optique d'une ou deux pistes varie de façon déterminée sur la largeur de la piste. Le dispositif lit les données et leurs densités optiques d'impression et commande la position latérale du spot mobile en fonction de ladite densité au moyen d'un circuit de traitement du signal (20). Ce dernier comporte également des moyens de détection d'erreurs (18, 19) exploitant les deux signaux (SV, SB) de deux premières pistes. Le contenu de la troisième piste peut être un signal d'horloge ou les mêmes données que les deux premières. Dans ce cas, le signal (SR) issu de cette troisième piste est utilisé pour la correction de l'erreur détectée.

0189341

## MEMOIRE NUMERIQUE A FILM PHOTOGRAPHIQUE COULEUR, ET DISPOSITIF DE LECTURE OPTIQUE CORRESPONDANT

Le stockage de masse de données numériques se développe de manière très importante, et sous les formes les plus diverses, par exemple cartes perforées, bandes magnétiques, disques optiques.

L'invention se propose d'utiliser un film photographique couleur pour stocker un grand nombre de données numériques. Elle propose également le dispositif lecteur optique qui permet de lire les données stockées sur le film.

Il est connu d'utiliser un film couleur pour stocker des informations bidimensionnelles en cartographie altimétrique et planimétrique. Le brevet français publié sous le n° 2 504 673 décrit un indicateur cartographique à enregistrement sur film photographique. La carte à visualiser est découpée en petites parcelles, chacune étant enregistrée sur une image du film. Ce dernier est supporté par des bobines, et analysé par un lecteur vidéo d'images. Un calculateur élabore, à partir de paramètres extérieurs, des données d'asservissement de position de l'image du film à visualiser. Ces données constituent la correction des signaux de balayage, ainsi qu'un asservissement de position du film selon la direction longitudinale par rotation des bobines. Selon la partie de la carte à visualiser, le film est déroulé dans un sens ou dans l'autre, afin de positionner, en face du lecteur vidéo, l'image correspondant à la partie de la carte à visualiser. D'autre part, le film possède, entre ses perforations latérales, des inscriptions numériques codées qui, lorsqu'elles sont balayées par le lecteur vidéo, permettent le positionnement précis du film.

Un premier objet de l'invention est une mémoire à film photographique couleur sur lequel sont enregistrées des données numériques. Il se caractérise en ce que les données sont stockées sur des surfaces élémentaires représentant chacune un bit en utilisant une première composante chromatique, disposées successivement sur au moins une piste parallèle à la direction longitudinale de défilement du film suivant laquelle s'effectue la lecture. Suivant une autre caractéristique du film la densité optique de chacune des surfaces élémentaires varie transversalement en vue de repérer et d'asservir, lors de la lecture optique, la position du rayon lumineux le long de la largeur de la piste. Plusieurs variantes de réalisation proposent l'utilisation de deux ou trois pistes différentes, chacune étant enregistrée à l'aide d'une composante chromatique différente.

Un autre objet de l'invention est un dispositif de lecture optique de ce film comportant un lecteur vidéo délivrant un signal vidéo pour chacune des composantes chromatiques. Le dispositif comprend des moyens d'asservissement en position du rayon lumineux, en fonction d'une valeur de consigne prédéterminée et des signaux vidéo issus des pistes dont la densité optique varie dans le sens de la largeur. Lorsque plusieurs pistes sont utilisées pour l'enregistrement des données sur le film, le dispositif peut comporter des moyens de détection d'erreurs et de correction d'erreurs.

L'invention et ses particularités apparaîtront plus clairement à la lecture de la description qui suit, donnée à titre d'exemple et illustrée des figures annexées qui représentent :

- Figure 1, un type d'enregistrement des données sur un film selon une seule piste conformément à l'invention ;

- Figures 2, 3, 6, différents types d'enregistrement des données sur un film selon deux pistes conformément à l'invention ;

- Figures 4 et 5, deux jeux de trois pistes utilisés dans des enregistrements conformément à l'invention ;

- Figure 7, un type d'enregistrement des données sur un film selon trois pistes conformément à l'invention ;

- Figure 8, un diagramme général d'un dispositif de lecture d'un film du type de la figure 2 ;

- Figure 9, le schéma d'un circuit de traitement d'un dispositif de lecture d'un film dont les trois pistes comportent les mêmes données.

Dans toutes les variantes décrites, le film photographique couleur est utilisé comme mémoire de masse et supporte l'enregistrement d'un grand nombre de données numériques. Chacune de ces données est enregistrée par impression, selon au moins une composante chromatique, d'une petite surface élémentaire du film représentant un bit. L'ensemble des données ainsi stockées forme une piste parallèle à la grande dimension du film. La lecture de ces données se fait par un déroulement continu du film, analogue au déroulement d'une bande magnétique. La lecture proprement dite est effectuée par le rayon lumineux, et plus particulièrement celui d'un lecteur optique à spot mobile.

On propose d'asservir transversalement à la piste le rayon lumineux de ce dernier, de manière à ce qu'il soit toujours centré au milieu de celle-ci. A cet effet, la densité optique des bits varie sur toute la largeur de la piste. Le film étant analysé par le rayon lumineux d'un lecteur vidéo, la lumière de ce rayon est modifiée par la transparence du film c'est-à-dire la densité optique. Les photodétecteurs utilisés dans le lecteur vidéo sont donc sensibles aux variations de densité optique du film, et les signaux qu'ils délivrent sont proportionnels à cette densité. En se fixant une position déterminée transversalement à la piste on se fixe une valeur déterminée de la densité optique et, une valeur de référence concernant la sortie des signaux issus des photodétecteurs. On prévoit d'utiliser dans le lecteur vidéo un asservissement de position du film à partir de ces signaux. La densité optique d'impression s'intensifie d'un bord à l'autre de la piste. Elle est pratiquement nulle sur un bord de la piste, et est maximale sur l'autre.

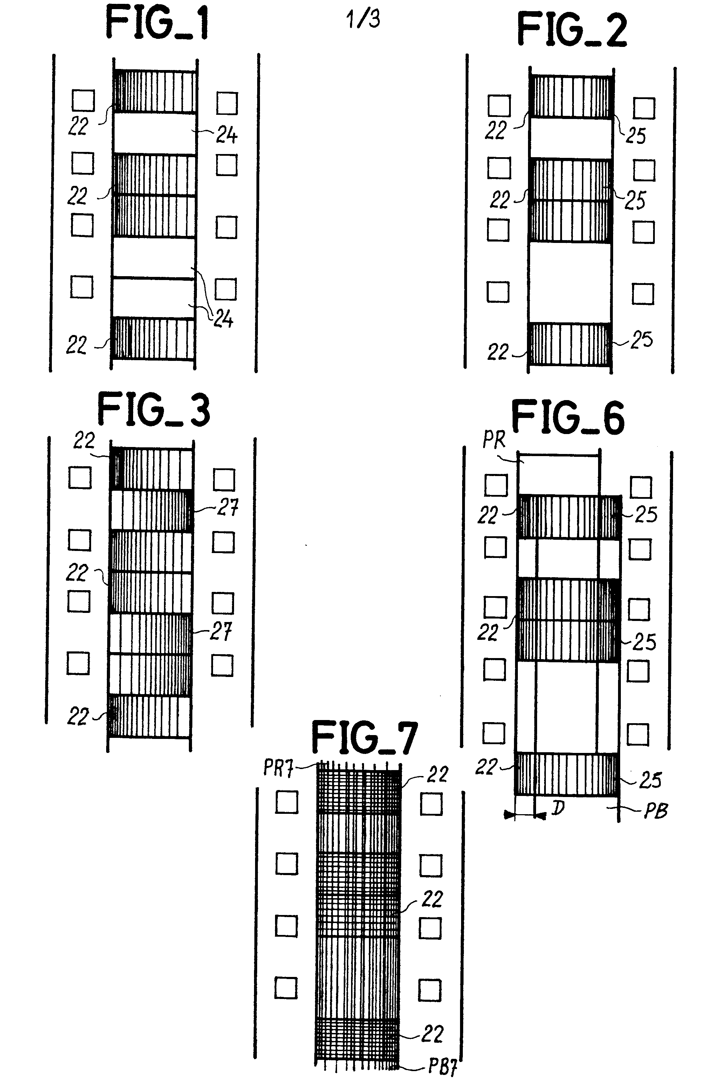

La figure 1 représente une partie d'un film supportant un tel enregistrement. Les surfaces élémentaires impressionnées 22 représentent l'information binaire "1", c'est-à-dire les bits, et les surfaces

4

élémentaires non impressionnées 24 représentent les informations binaires "0". Elles sont disposées successivement dans la direction longitudinale du film. La hauteur de ces surfaces représentant les bits est constante, quelles que soient les informations binaires qu'elles supportent. Sur les différentes figures elles ont été représentées juxtaposées. Le pas est régulier.

L'invention prévoit de détecter et d'éliminer les erreurs de lecture d'une première piste supportant les données numériques. Dans ce but, on procède préalablement sur le film à l'enregistrement d'une deuxième piste selon une composante chromatique différente de celle utilisée pour l'enregistrement de la première piste. En référence à la figure 2, cette deuxième piste supporte les mêmes données que la première, mais les surfaces élémentaires 25 représentant les bits sont enregistrées de façon à ce que l'intensité optique varie de manière opposée à celle 22 de la première piste. Pour cette deuxième piste l'intensité optique varie dans le sens contraire à celui de la première piste.

Ces deux pistes sont, de préférence, centrées et superposées au milieu du film. Si on veut centrer le rayon lumineux au milieu des deux pistes, on doit choisir une position où la différence des densités optiques des première et deuxième pistes est nulle.

Dans le cas de la figure 3 les données 27 enregistrées sur la deuxième piste sont les données complémentaires à celles enregistrées sur la première piste, c'est-à-dire qu'à un bit de valeur "1" 22 sur la première piste, correspond une surface élémentaire non impresionnée sur la deuxième piste. De même pour une valeur "0" sur la première piste correspond sur la deuxième piste à une surface élémentaire impressionnée 27 correspondant à un bit de valeur "1". Cet agencement permet de détecter une erreur de lecture. En effet, en supposant que la première piste est enregistrée en rouge et que la deuxième piste est enregistrée en bleu, la somme des signaux issus des deux photodétecteurs rouge et bleu du dispositif de lecture signalant la présence ou non de bits doit toujours être égale à 1. A partir de cette vérification on peut valider ou non la lecture.

Comme dans le cas de la figure 2, si les deux pistes sont superposées on peut centrer le rayon au milieu des pistes.

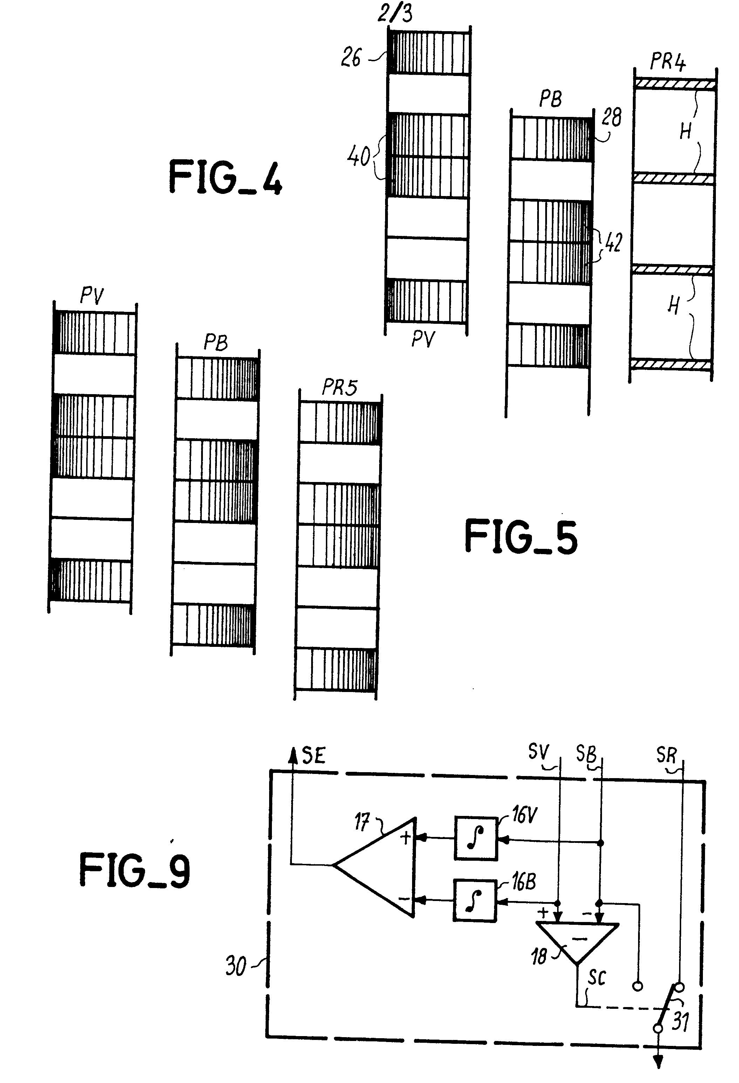

La figure 4 représente deux pistes différentes une verte PV, une bleue PB qui supportent les mêmes données numériques, mais décalées dans le sens de la plus grande dimension du film d'une piste par rapport à l'autre. Sur cette figure, au bit 26 de la première piste PV correspond le bit 28 de la deuxième piste PB, et aux bits 40 de la première piste correspondent les bits 42 de la deuxième figure. Dans ce cas on prévoit dans le dispositif de lecture un stockage de la lecture de la première piste qui sera comparée à la lecture de la deuxième piste, les résultats devant être identiques. On peut prévoir également d'utiliser un lecteur équipé de deux faisceaux décalés l'un par rapport à l'autre selon la direction du défilement du film, d'une distance égale au décalage des données d'une piste par rapport à l'autre.

Dans une réalisation préférentielle du film, il est prévu une troisième piste PR4. Cette dernière supporte des données H relatives à un signal d'horloge et est de composante chromatique différente (rouge).

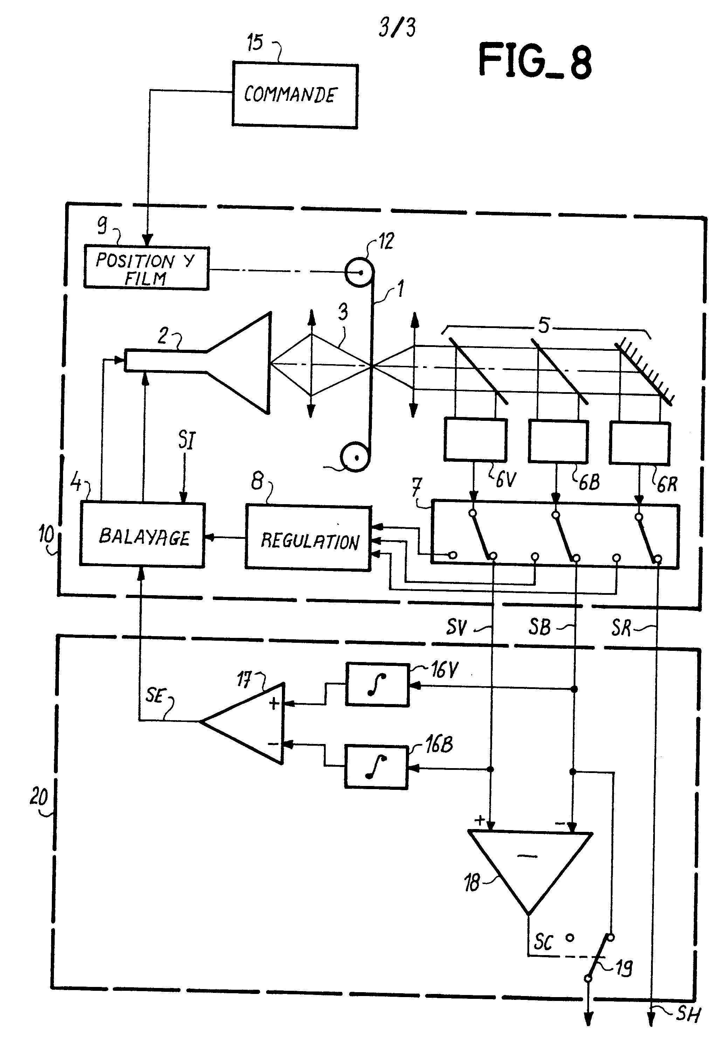

Sur la figure 5 la troisième piste PR5 supporte également les données numériques, mais de façon décalée par rapport aux deux autres. L'utilisation de cette troisième piste est décrite en correspondance avec la figure 9.

La figure 6 représente une variante de réalisation du film de la figure 2. Le nombre de pistes (2) est identique de même que leur codage. Seule la position des pistes sur le film change. Celles-ci sont décalées latéralement l'une par rapport à l'autre. Ce décalage, repéré D sur la figure, peut être de l'ordre de 10 micromètres. De même que pour les figures 2, 3, 4, lorsque le faisceau du lecteur est bien centré, la différence des deux densités optiques perçues par le lecteur est nulle.

Dans la variante représentée dans la figure 7, les données ne sont fixées sur le film que sur une seule piste (hachurées horizontalement 22). Deux autres pistes PV et PB, chacune de composante chromatique différente de la première, ne sont utilisées que pour l'asservissement en position du faisceau du lecteur. Dans le cas de cette figure on utilise le système de variation de densité optique précédemment décrit et plus spécialement celui utilisé à la figure 2. Ces deux dernières pistes PR7 et PB7 ne sont donc pas modulées par les données numériques à stocker.

En référence à la figure 8, le dispositif de lecture optique selon l'invention comprend principalement un ensemble lecteur vidéo 10 d'un film couleur, et un ensemble de circuits de traitement du signal 20.

L'ensemble lecteur 10 est de préférence un lecteur vidéo à spot mobile. Le film 1 est supporté par des bobines 12. Un tube cathodique 2 produit un faisceau lumineux 3 qui est focalisé dans le plan du film. La densité optique du film module le faisceau selon une, deux ou trois composantes chromatiques différentes. Le faisceau ainsi modulé est remis sous forme de rayons parallèles et repris par des moyens de détection. Dans le cas de l'utilisation d'un film à trois composantes chromatiques, la détection est effectuée par un séparateur trichrome 5 et trois détecteurs 6V, 6B, 6R. Dans le cas d'utilisation d'un film à deux composantes, la détection ne nécessite que deux demi-photodiodes. Les trois signaux SV, SB, SR, issus des trois détecteurs constituent les signaux de sortie du lecteur vidéo.

Au moins une des bobines 12 est entraînée en rotation par un moteur 9 lui-même commandé par un circuit de commande 15 de l'ensemble. Le tube cathodique 2 est commandé par un circuit de balayage 4. Il est possible d'utiliser un triple commutateur 7 pour brancher une boucle de régulation 8 recevant les trois signaux SV, SB, SR, et permettant d'agir sur l'intensité de la source lumineuse constituée par le faisceau du tube d'analyse 2.

L'invention propose d'utiliser au moins un de ces signaux SV, SB, SR pour asservir la position le long de la largeur du film du faisceau lumineux 3. Dans le cas de la figure 8 on utilise les signaux SV et SB issus des deux premières pistes. Ils sont appliqués chacun à un intégrateur 16V et 16B dont les sorties sont appliquées aux entrées d'un circuit soustracteur 17. La sortie de ce dernier est appliquée au circuit de balayage 4 pour agir sur la position latérale du faisceau 3. Dans ce cas de figure on utilise un film conforme à celui représenté à la figure 4, c'est-à-dire sur lequel les deux première pistes PV et PB contiennent exactement les mêmes données numériques. Si le faisceau lumineux 3 est centré au milieu du film, il est modifié autant par la densité optique selon la composante chromatique verte V que par celle de la composante chromatique bleue B. Les signaux issus des deux détecteurs 6V et 6B sont donc théoriquement égaux. S'ils ne le sont pas, le signal d'erreurs SE issu du soustracteur 17 n'est pas nul. L'asservissement en position latérale du faisceau 3 sur le film est alors corrigé par l'asservissement de balayage du circuit 4 en fonction de l'amplitude du signal d'erreur SE.

En ce qui concerne les données du film qui sont analysées, le troisième signal SR donnant un signal d'horloge (figure 4), constitue une première sortie du circuit de traitement 20. La deuxième sortie est constituée directement par la lecture des données lues sur l'une des deux premières pistes, par exemple SB et sur laquelle est placée un interrupteur 19. Pour détecter les erreurs de lecture des données, les deux signaux SV et SB de lecture des données, sont appliqués à l'entrée d'un deuxième soustracteur 18 délivrant la différence SC de ces deux voies V et B. Si cette différence est nulle, c'est-à-dire que le signal SV est identique au signal SB, les données lues sur ces deux voies étant identiques, aucune erreur n'est détectée. L'interrupteur 19 qui est commandé par le signal de sortie SC du deuxième soustracteur reste fermé. Le signal SB constitue alors le signal de données que délivre le circuit de traitement 20. Si par contre le signal SC n'est pas nul, l'interrupteur 19 reste ouvert. Le signal de lecture SB n'est alors pas transmis par le circuit de traitement 20. Le signal SC peut également constituer une troisième voie issue du circuit de traitement. Il constitue dans ce cas un signal de correction d'erreurs qui est nul lorsqu'il n'y a pas d'erreur.

La figure 9 représente un circuit de traitement 30 utilisé pour la détection et la correction d'erreurs. Il est utilisable lorsque le film analysé est un film dont les trois voies comportent chacune les données numériques. Un tel film peut être du type de celui représenté à la figure 5, une troisième voie étant rajoutée aux deux premières et étant décalées par rapport à ces deux premières voies. Dans ce cas le lecteur vidéo comporte trois faisceaux lumineux 3 différents, chacun analysant une voie. Ces trois faisceaux sont décalés de la même distance que le sont les données numériques sur chacune des voies, de telle sorte que les trois signaux SV,SB,SR donnent simultanément le résultat de la lecture des trois voies au même moment.

Le circuit de traitement 30 utilisé dans ce cas comporte le même deuxième soustracteur 18 produisant le même signal de détection d'erreurs SC entre les deux premières voies. Il commande un interrupteur 31 qui connecte à la sortie du circuit de traitement soit l'une des deux premières voies analysées, en l'occurrence la voie B, soit la troisième c'est-à-dire la voie R. Si une erreur est détectée entre les deux premières voies, c'est que l'une de ces deux premières lectures est erronée. On transmet alors le signal lu sur la troisième voie, celui-ci ayant peu de chance d'être également erroné. En effet, l'analyse de chaque piste s'effectuant à trois endroits différents du film, étant donné le décalage des données sur chacune des voies, la probabilité pour que deux de ces pistes soient affectées simultanément est très réduite. Le principe mis en oeuvre dans ce circuit 30 est que, si une erreur apparaît sur l'une des trois voies, on transmet à la sortie le signal des deux autres. Ce circuit de traitement comporte bien entendu les circuits 16V 16B et 17 nécessaires à l'asservissement en position latérale du faisceau.

Le deuxième soustracteur 18 peut être remplacé par d'autres éléments remplissant des fonctions similaires. Par exemple, un sommateur peut être utilisé pour détecter les erreurs. Recevant les deux premières voies V et B, si les deux signaux SV et SB sont identiques le signal issu de ce sommateur sera égal soit à zéro soit à deux, et il est aisé de ne commander l'interrupteur à l'ouverture par rapport à la voie B que si le signal de sortie du sommateur est égal à un, c'est-à-dire que les signaux sont différents.

Dans le cas de l'utilisation d'un film du type représenté aux figures 1 et 6, aucun circuit de détection et de correction d'erreurs n'est prévu étant donné que les données sont stockées sur une seule des pistes. Le signal issu de cette piste est donc le signal transmis par le circuit de traitement.

10

R E V E N D I C A T I O N S

1. Mémoire numérique à film photographique couleur sur lequel sont stockées des données numériques caractérisé en ce que lesdites données sont stockées sur des surfaces élémentaires représentant chacune un bit en utilisant une première composante chromatique, disposées successivement sur au moins une piste (PV) parallèle à la direction longitudinale de défilement du film suivant laquelle s'effectue la lecture.

2. Mémoire numérique à film selon la revendication 1, caractérisé en ce que la densité optique de la piste varie dans le sens transversal en vue de repérer et d'asservir lors de la lecture optique la position du rayon lumineux (3) le long de la largeur de la piste.

3. Mémoire numérique à film selon la revendication 2, caractérisé en ce qu'il comporte deux pistes superposées de composantes chromatiques différentes supportant les mêmes données numériques, les variations respectives des densités optiques étant inversées.

4. Mémoire numérique à film selon l'une quelconque des revendications 1 ou 2, caractérisé en ce que les données complémentaires à la première piste sont stockées sur une deuxième piste superposée à la première et de composante chromatique différente.

5. Mémoire numérique à film selon la revendication 3, caractérisé en ce que les données numériques stockées sur une première piste (PV) sont décalées dans le sens de la grande dimension du film par rapport aux données stockées sur une deuxième piste (PB).

6. Mémoire numérique à film selon la revendication 1, caractérisé en ce qu'il comporte deux autres pistes (PR7, PB7) superposées de composantes chromatiques différentes non modulées par les données numériques mais dont les densités optiques varient de manière opposée et transversalement à la piste, de façon à permettre le repérage du rayon lumineux le long de la largeur de la piste et son asservissement en position par rapport à une position latérale déterminée.

7. Mémoire numérique à film selon l'une quelconque des revendications 3 à 5, caractérisé en ce qu'une troisième piste (PR4) de composante chromatique différente des deux premières supporte des données relatives à un signal d'horloge.

8. Mémoire numérique à film selon la revendication 5, caractérisé en ce que les mêmes données numériques sont stockées sur une troisième piste (PR5) de composante chromatique différente des première et deuxième pistes (PV, PB) et décalées dans le sens de la grande dimension du film par rapport aux données stockées sur les première et deuxième pistes.

9. Dispositif de lecture optique d'une mémoire selon l'une quelconque des revendications 2 à 4, 6 comportant un lecteur vidéo en couleur (10) délivrant un signal vidéo (SV,SB,SR) pour chacune des composantes chromatiques, caractérisé en ce qu'il comprend des moyens d'asservissement (16V,16B,17) en position latérale du rayon lumineux, en fonction d'une valeur de consigne prédéterminée et des signaux vidéo (SV,SB) issus des pistes dont la densité optique varie transversalement , ces moyens d'asservissement comprenant principalement un soustracteur (17) des signaux (SV,SB) issus des deux premières pistes et délivrant leur différence qui constitue un signal d'erreur (SE) qui est appliqué au circuit de balayage (4) du lecteur vidéo (10) pour asservir la position latérale du spot en fonction d'un position prédéterminée.

10. Dispositif selon la revendication 9 associée à l'une des revendications 3,4,5, caractérisé en ce qu'il comprend des moyens de détection d'erreurs (18) recevant les signaux issus des pistes sur lesquelles sont enregistrées les données et délivrant un signal de validation (SC), ces moyens de détection d'erreurs comprenant un deuxième soustracteur (18) recevant les signaux (SV et SB) des deux

premières voies, délivrant leur différence constituant le signal de validation (SC), et un interrupteur (19) commandé par ce signal de validation pour commuter soit le signal (SB) issu de la deuxième piste, soit le signal (SR) issu de la troisième piste.

11. Dispositif de lecture selon la revendication 9 d'une mémoire selon la revendication 8, caractérisé en ce qu'il comprend des moyens de correction d'erreurs (31), recevant le signal de validation (SC) les signaux (SB,SR), issus des deuxième et troisième pistes et délivrant selon le signal de validation, soit le signal (SB) de la deuxième piste soit le signal (SR) issu de la troisième piste.

0189341

1/3

FIG_1

FIG_2

FIG_3

FIG_6

FIG_7

0189341

FIG_4

FIG_5

FIG_9

0189341

3/3

FIG_8

# 0189341

Office européen
des brevets

**RAPPORT DE RECHERCHE EUROPEENNE**

Numero de la demande

EP 86 40 0056

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 148 355 (SLITER et al.) <br> * Colonne 1, lignes 18-37, 64-68; colonne 2, lignes 35-37 et ligne 65 - colonne 3, ligne 29; colonne 5, ligne 41 - colonne 6, ligne 2 et lignes 30-33; figures 1-3 * | 1 | G 11 B 7/00 <br> G 11 B 7/013 <br> G 11 B 7/16 <br> G 11 B 7/20 <br> G 11 B 7/09 |
| | --- | | |
| A | FR-A-1 312 000 (COMPAGNIE DES MACHINES BULL) <br> * Page 2, colonne de droite, début du dernier paragraphe - page 3, colonne de gauche, fin du premier paragraphe; colonne de droite, début du dernier paragraphe - page 4, colonne de gauche, fin du paragraphe 5 - paragraphe 6; résumé, point 3; figures 1,3 * | 1,9 | |
| | --- | | **DOMAINES TECHNIQUES RECHERCHES (Int. Cl.4)** |
| A | FR-A-1 230 773 (THE NATIONAL CASH REGISTER CO.) <br> * Page 7, colonne de gauche, paragraphe 3; colonne de droite, début du paragraphe 2 - page 8, colonne de droite, début du dernier paragraphe; figures 8-10 * | 1,7,9 | G 11 B <br> G 11 C <br> H 04 N <br> G 06 K |
| | ---     -/- | | |

Le présent rapport de recherche a été établi pour toutes les revendications

| Lieu de la recherche <br> LA HAYE | Date d'achevement de la recherche <br> 21-04-1986 | FUX J.    Examinateur |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

**Office européen des brevets**

**RAPPORT DE RECHERCHE EUROPEENNE**

EP 86 40 0056

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 596 741 (TYLER et al.) <br><br> * Colonne 3, lignes 44-47; colonne 4, lignes 65-70; colonne 5, lignes 11-44; colonne 7, lignes 45-61; colonne 10, ligne 71 - colonne 11, ligne 66; figures 1-5 * | 1,4,5, 9,10 | |
| A | DE-B-1 053 563 (N.V. PHILIP'S GLOEILAMPENFABRIEKEN) <br> * Colonne 3, lignes 30-66; colonne 5, lignes 8-36; colonne 6, ligne 63 - colonne 7, ligne 11; figures 2,5 * | 1,2,9 | |
| A | US-A-3 510 658 (RABEDEAU) <br> * Colonne 3, ligne 25 - colonne 4, ligne 20; figures 1,3,4 * | 1,2,9 | **DOMAINES TECHNIQUES RECHERCHES (Int. Cl.4)** |
| A | CH-A- 477 738 (R. BOSCH GmbH) <br> * Colonne 3, lignes 35-38 et ligne 61 - colonne 4, ligne 34; figures 1,2,4 * | 1,2,9 | |
| A | US-A-3 761 903 (BIRD, Jr. et al.) <br> * Colonne 5, lignes 35-63; colonne 13, lignes 24-40; colonne 17, lignes 41-64; colonne 18, lignes 17-22; figures 1,4 * | 1,5,10 | |

--- -/-

Le présent rapport de recherche a été établi pour toutes les revendications

| Lieu de la recherche | Date d'achèvement de la recherche | Examinateur |
|---|---|---|
| LA HAYE | 21-04-1986 | FUX J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 720 923 (CHEN et al.)<br>* Colonne 4, lignes 28-60; colonne 6, lignes 37-49; colonne 7, lignes 4-24; figures 1,4,5 *<br><br>--- | 1,5,10 | |
| A | DE-C- 601 707 (WIGGE)<br>* Revendication; figures 1,2 *<br><br>--- | 2 | |
| A | IBM TECHNICAL DISCLOSURE BULLETIN, vol. 12, no. 6, novembre 1969, pages 784-785, Armonk, New York, US; R.V. DAVIDGE et al.: "Multichromatic optical film recording of multiple signals"<br>* En entier *<br><br>----- | 1,3 | |
| | | | DOMAINES TECHNIQUES RECHERCHES (Int. Cl.4) |

Le present rapport de recherche a été établi pour toutes les revendications

| Lieu de la recherche | Date d'achèvement de la recherche | | Examinateur |
|---|---|---|---|
| LA HAYE | 21-04-1986 | FUX J. | |